# EUROPÄISCHE PATENTSCHRIFT

(11) **EP 2 681 481 B1**
(45) Veröffentlichungstag und Bekanntmachung des Hinweises auf die Patenterteilung: **09.12.2015**
(21) Anmeldenummer: 12702434.7
(22) Anmeldetag: 02.02.2012
(51) Int. Cl.: F16L 55/07, F16K 24/04

(54) **KUPPLUNG MIT ENTLÜFTUNGSÖFFNUNG**
COUPLING FOR A PLUG-IN CONNECTION
RACCORD POUR LIAISON PAR ENFICHAGE

(30) Priorität: 28.02.2011 DE 102011004859
(43) Veröffentlichungstag der Anmeldung: 08.01.2014
(73) Patentinhaber: Bayerische Motoren Werke Aktiengesellschaft, 80809 München (DE)
(72) Erfinder: LEPSCHI, Matthias, 80809 München (DE); ENKE, Wolfram, 80803 München (DE); ISER, Florian, 80804 München (DE); DEMBINSKI, Norbert, 81739 München (DE); SPIESS, Thomas, 81739 München (DE)
(86) Internationale Anmeldenummer: PCT/EP2012/000461
(87) Internationale Veröffentlichungsnummer: WO 2012/116774

(56) Entgegenhaltungen:
- EP-A1- 0 237 508
- EP-A2- 2 363 628
- FR-A1- 2 353 324
- US-A- 924 839
- US-A1- 2005 104 373

## Beschreibung

Die Erfindung betrifft eine Kupplung für eine Steckverbindung für medienführende Leitungen mit einem Strömungskanal, der ein erstes Ende, ein zweites Ende und einen stufenartig erweiterten Innenquerschnitt aufweist, um bei Medienführung die Ausbildung eines Rückstromgebiets zu ermöglichen, sowie einer Entlüftungsöffnung.

Bekannt sind Steckverbindungen zum Verbinden von medienführenden Leitungen, beispielsweise im Bereich Kühlwasser- und Heizungsleitungen sowie zum Einsatz für Ladeluftsysteme bei Kraftfahrzeugen. Derartige Steckverbindungen umfassen einen üblicherweise standardisierten Anschlussstutzen und eine Kupplung mit Haltefeder, Haltering und Dichtung, die zur Schließen der Steckverbindung mit dem Anschlussstutzen werkzeuglos verbunden werden kann. In die Kupplung werden bereits beispielsweise eine Abzweigung, Halteplatte, Aufnahme für Thermofühler oder ein Abscheide-Abgang für Gas integriert.

Allerdings weisen bekannte Kupplungen mit Abscheide-Abgang regelmäßig eine nur unzureichende Abscheidewirkung auf, sodass beispielsweise bei Einsatz in einer Kühlmittelleitung eine Kühlleistung reduziert ist.

Aus der FR 2353324 A1 ist ein Heizungssystem bekannt mit einem Flüssigkeitserhitzer und einer wärmeemittierenden Einrichtung mit einer äußeren Verbindung dazwischen zur Führung von erhitzter Flüssigkeit aus dem Flüssigkeitserhitzer zu der wärmeemittierenden Einrichtung und mit einer Rücklaufverbindung dazwischen zur Führung der abgekühlten Flüssigkeit aus der wärmeemittierenden Einrichtung zu dem Flüssigkeitserhitzer, bei dem eine Vorrichtung zur Entfernung von Luft und/oder Dampf aus der Flüssigkeit in eine der Verbindungen geschaltet ist und die Vorrichtung einen Hohlkörper, einen Einlass für den Hohlkörper, einen Auslass aus dem Hohlkörper, eine Oberfläche innerhalb des Hohlkörpers und eine Entlüftungseinrichtung im obersten Teil des Hohlkörpers umfasst und bei dem der Einlass und die Oberfläche so angeordnet sind, dass im Gebrauch ein Luft-Flüssigkeitsgemisch aus der einen Verbindung, das in den Hohlkörper durch den Einlass in Form eines Strahles eingeleitet wird, auf die Oberfläche auftrifft, so dass das Gemisch sich über die Oberfläche ausbreitet und die Luft und/oder der Dampf von dem sich ausbreitenden Gemisch abgeschieden wird und zu der Entlüftungseinrichtung aufsteigt und dass dann die Flüssigkeit den Hohlkörper durch den Auslass hindurch verlässt und zu der einen der genannten Verbindungen gelangt.

Dokument US 924 839 offenbart eine Vorrichtung nach dem Oberbegriff des Anspruchs 1.

Aufgabe der Erfindung ist es daher; eine eingangs genannte Kupplung bereit zu stellen, mit der eine verbesserte Abscheideleistung erreicht werden kann.

Die Lösung der Aufgabe erfolgt mit einer Kupplung mit den Merkmalen des Anspruchs 1, indem ein Innendurchmesser des zweiten Endes größer ist als ein Innendurchmesser des ersten Endes und die stufenartige Erweiterung über den Umfang des Innenquerschnitts asymmetrisch ausgeführt ist. Damit kann bei Medienführung die Ausbildung eines über den Umfang des Innenquerschnitts asymmetrischen Rückstromgebiets erreicht werden.

Besonders zu bevorzugende Ausführungen und Weiterbildungen der Erfindung sind Gegenstand der Unteransprüche.

Vorzugsweise weist die stufenartige Erweiterung einen Bereich minimaler Erweiterung und einen Bereich maximaler Erweiterung auf. Sehr zweckmäßig ist es, wenn in dem Bereich minimaler Erweiterung keine oder eine nur geringe Stufe gebildet ist. Die Kupplung kann in dem Bereich maximaler Erweiterung eine Stufe aufweisen, deren Höhe ca. 10-60%, insbesondere von ca. 20-50% der Nennweite der Kupplung beträgt. Die Nennweite kann die lichte Weite eines leitungsseitigen Endes der Kupplung oder eines mit der Kupplung verbindbaren Stutzens sein. Damit kann in dem Bereich minimaler Erweiterung eine verlustarme Medienführung erfolgen und in dem Bereich maximaler Erweiterung kann sich ein besonders großes und/oder dynamisches Rückstromgebiet ausbilden.

Einem bevorzugten Ausführungsbeispiel zufolge ist die Entlüftungsöffnung in dem Bereich maximaler Erweiterung angeordnet. Damit kann eine besonders effektive Entlüftung erfolgen.

Nachfolgend sind besonders zu bevorzugende Ausführungsbeispiele der Erfindung unter Bezugnahme auf Figuren näher erläutert, dabei zeigen schematisch und beispielhaft.
- Figur 1: eine Kupplung mit vergrößertem Rückstromgebiet und integrierter Entlüftungsöffnung in Schnittdarstellung und
- Figur 2: eine Kupplung mit vergrößertem Rückstromgebiet und integrierter Entlüftungsöffnung in Schnittdarstellung.

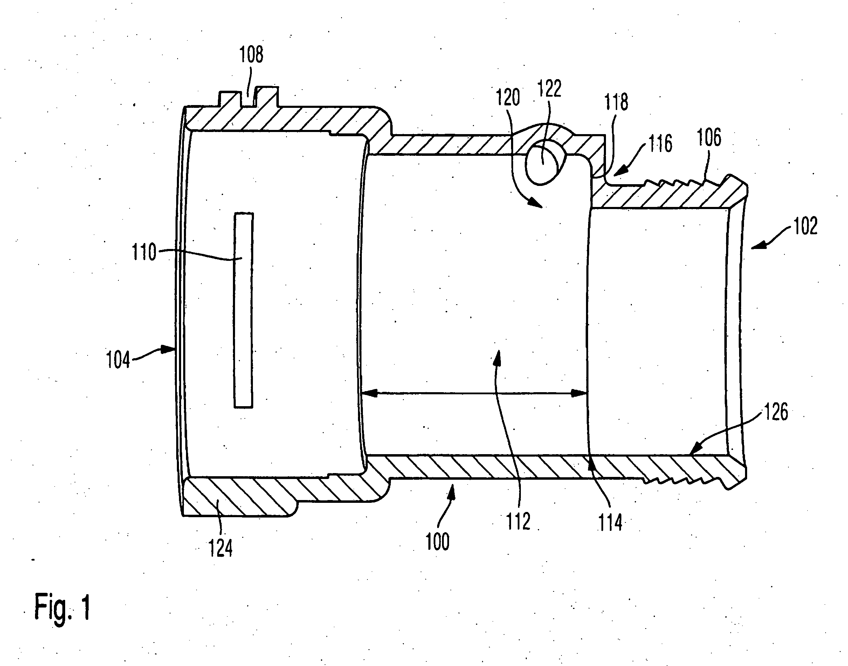

Figur 1 zeigte eine Kupplung 100 einer ansonsten nicht näher dargestellten Steckverbindung für medienführende Leitungen. Die Kupplung 100 ist.zur Verbindung mit einem korrespondierenden Stutzen bestimmt und geeignet. Die Leitung kann ein Schlauch oder ein Rohr, wie Glatt- oder Wellrohr, sein. In der Leitung kann eine Flüssigkeit, wie Wärmetransferflüssigkeit, Schmierflüssigkeit, Wasser, Öl, Kraftstoff oder Bremsflüssigkeit, geführt sein. Die Kupplung 100 kann in einem Kraftfahrzeug, insbesondere in einem brennkraftmaschinengetriebenen PKW oder Kraftrad, verwendet werden.

Die Kupplung 100 kann aus einem recyclingfähigen Werkstoff, wie Kunststoff, hergestellt sein. Die Kupplung 100 kann beispielsweise aus Polyamid, gegebenenfalls glasfaserversetzt, hergestellt sein. Die Kupplung 100 kann aus Polyamid 6.6 mit einem Glasfaseranteil von ca. 30% hergestellt sein. Die Kupplung 100 kann jedoch auch aus einem anderen technischen Thermoplast mit einem anderen Füllgrad und/oder einem anderen Füllstoff hergestellt sein. Vorzugsweise ist die Kupplung 100 zum Einsatz bei Temperaturen von -40°C bis + 135°C geeignet.

Die Kupplung 100 weist ein leitungsseitiges Ende 102 und ein stutzenseitiges Ende 104 auf. Das leitungsseitige Ende 102 umfasst eine kontrierte äußere Oberfläche 106 zur Verbindung mit und Befestigung einer Leitung. Das stutzenseitige Ende 104 umfasst eine außenseitig Aufnahmekontur 108 für eine Haltefeder sowie Durchbrechungen 110 für die Haltefeder, sodass mittels der Haltefeder elastisch ein lösbarer Formschluss mit einem innenseitig der Kupplung 100 aufnehmbaren Stutzen herstellbar ist. Außerdem können in der Kupplung 100 ein Dichtungsring und/oder ein Haltering integriert sein. Der Dichtring kann ein O-Ring, beispielsweise aus EPDM, sein.

Zwischen dem leitungsseitigen Ende 102 und dem stutzenseitigen Ende 104 weist die Kupplung 100 einen Mittelbereich 112 auf. Der Innendurchmesser des Mittelbereichs 112 ist größer, als der Innendurchmesser des leitungsseitigen Endes 102. Der Innendurchmesser des stutzenseitigen Endes 104 ist größer, als der Innendurchmesser des Mittelbereichs 112. Der Mittelbereich 112 kann gegebenenfalls auch baulich länger ausgeführt werden.

Die Durchmesservergrößerung vom leitungsseitigen Ende 104 zum Mittelbereich 112 erfolgt stufenartig, jedoch über den Umfang asymmetrisch. In dem in der Figur 1 dargestellten Schnitt ist am unteren Innendurchmesser 114 eine minimale und am oberen Innendurchmesser 116 eine maximale Durchmesservergrößerung vorgesehen. Damit ist am oberen Innendurchmesser 116 eine ausgeprägte Kante 118 vorhanden, die die Ausbildung eines besonders großen und/oder dynamischen Rückstromgebiets 120 ermöglicht.

Im Bereich dieses Rückstromgebiets 120 ist eine Entlüftungsöffnung 122 angeordnet. Wenn in der Leitung und durch die Kupplung 100 ein flüssiges Medium, wie Kühlwasser oder Öl strömt, das mit Luft beladen ist, kann sich hinter der Kante 118 ein Rückstromgebiet 120 ausbilden, in dem sich Luft sammeln kann. Die gesammelte Luft kann durch die Entlüftungsöffnung 122 abgeführt werden.

Die Herstellung des Kupplungskörpers 124 kann in einem Spritzgießverfahren in einem mehrteiligen Werkzeug erfolgen, wobei ein erster Schieber zur Formung der den Durchflusskanal bildenden Innenkontur 126 und ein zweiter Schieber zur Herstellung der Entlüftungsöffnung 122 vorgesehen ist.

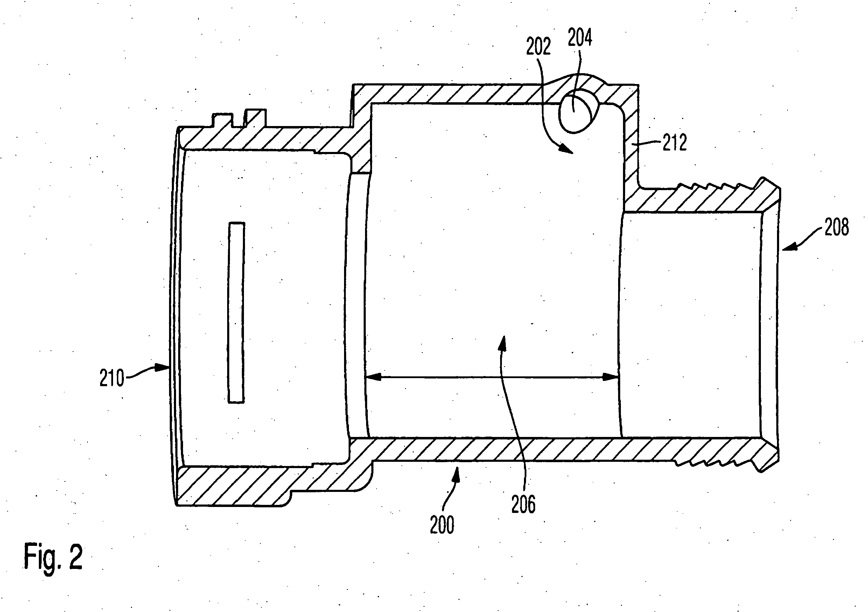

Figur 2 zeigt eine Kupplung 200 mit vergrößertem Rückstromgebiet 202 und integrierter Entlüftungsöffnung 204 in Schnittdarstellung, bei der der Mittelbereich 206 einen besonders großen Innendurchmesser aufweist. Der Innendurchmesser des Mittelbereichs 206 ist bei diesem Ausführungsbeispiel nicht nur größer, als der Innendurchmesser des leitungsseitigen Endes 208, sondern auch größer, als der Innendurchmesser des stutzenseitigen Endes 210. Damit ist eine besonders ausgeprägte Kante 212 vorhanden und die Effizienz der Abscheidung kann noch weiter verbessert werden. Im Übrigen wird auf die Beschreibung der Kupplung 100 gemäß Figur 1 verwiesen.

## Patentansprüche

1. Kupplung (100, 200) für eine Steckverbindung für medienführende Leitungen mit einem Strömungskanal, der ein erstes Ende (102, 208), ein zweites Ende (104, 210) und einen stufenartig erweiterten Innenquerschnitt aufweist, um bei Medienführung die Ausbildung eines Rückstromgebiets (120, 202) zu ermöglichen, sowie einer Entlüftungsöffnung (122, 204), wobei ein Innendurchmesser des zweiten Endes (104, 210) größer ist als ein Innendurchmesser des ersten Endes (102, 208) und die stufenartige Erweiterung über den Umfang des Innenquerschnitts asymmetrisch ausgeführt ist
**dadurch gekennzeichnet, dass**
im Bereich des Rückstromgebietes (120) in dem Bereich maximaler Erweiterung die Entlüftungsöffnung (122, 204), angeordnet ist.

2. Kupplung (100, 200) nach Anspruch 1, **dadurch gekennzeichnet, dass** die stufenartige Erweiterung einen Bereich minimaler Erweiterung (114) und einen Bereich maximaler Erweiterung (116) aufweist.

3. Kupplung (100, 200) nach einem der vorhergehenden Ansprüche, **dadurch gekennzeichnet, dass** in dem Bereich minimaler Erweiterung (114) keine oder eine nur geringe Stufe gebildet ist.

4. Kupplung (100, 200) nach einem der vorhergehenden Ansprüche, **dadurch gekennzeichnet, dass** in dem Bereich maximaler Erweiterung (116) eine Stufe (118, 212) gebildet ist, die eine Höhe von ca. 10-60%, insbesondere von ca. 20-50% der Nennweite der Kupplung (100, 200) aufweist.

5. Kupplung (100, 200) nach einem der vorhergehenden Ansprüche, **dadurch gekennzeichnet, dass** die Entlüftungsöffnung (122, 204) in dem Bereich maximaler Erweiterung (116) angeordnet ist.

## Claims

1. A coupling (100, 200) for a plug-in connection for media-conveying lines comprising a flow duct having a first end (102, 208), a second end (104, 210) and a stepwise widening inner cross-section in order to form a back-flow area (120, 202) when media are being conveyed, also comprising a vent opening (122, 204), wherein an inner diameter of the second end (104, 210) is greater than an inner diameter of the first end (102, 208) and the stepwise widening is obtained asymmetrically over the periphery of the inner cross-section,
**characterised in that**
the vent opening (122, 204) is disposed in the place of maximum widening in the back-flow area (120).

2. A coupling (100, 200) according to claim 1, **characterised in that** the stepwise widening comprises a minimum widening region (114) and a maximum widening region (116).

3. A coupling (100, 200) according to any of the preceding claims, **characterised in that** only a small step, if any, is formed in the maximum widening area (114).

4. A coupling (100, 200) according to any of the preceding claims, **characterised in that** a step (118, 212) is formed in the maximum widening area (116), its height being about 10 - 60%, especially about 20 - 50% of the rated width of the coupling (100, 200).

5. A coupling (100, 200) according to any of the preceding claims, **characterised in that** the vent opening (122, 204) is disposed in the maximum widening area (116).

## Revendications

1. Raccord (100, 200) destiné à permettre une liaison par enfichage de conduites de circulation de fluide comprenant un canal d'écoulement comportant une première extrémité (102, 208), une seconde extrémité (104, 210) et une section interne s'élargissant par gradins pour permettre la formation d'une zone de reflux (120, 202), lors de la circulation du fluide ainsi qu'une ouverture de dégazage (122, 204), le diamètre interne de la seconde extrémité (104, 210) étant supérieur au diamètre interne de la première extrémité (102, 208) et l'élargissement par gradins étant asymétrique sur la périphérie de la section interne,
**caractérisé en ce que**
l'ouverture de dégazage (122, 204) est située dans la zone de reflux (120), dans la zone de l'élargissement maximum.

2. Raccord (100, 200) conforme à la revendication 1,
**caractérisé en ce que**
l'élargissement par gradins comporte une zone d'élargissement minimum (114) et une zone d'élargissement maximum (116).

3. Raccord (100, 200) conforme à l'une des revendications précédentes,
**caractérisé en ce qu'**
aucun gradin ou uniquement un petit gradin est formé dans la zone d'élargissement minimum (114).

4. Raccord (100, 200) conforme à l'une des revendications précédentes,
**caractérisé en ce que**
dans la zone d'élargissement maximum (116) est formé un gradin (118, 212) qui a une hauteur d'environ 10-60% en particulier d'environ 20-50% de la largeur nominale du raccord (100, 200).

5. Raccord (100, 200) conforme à l'une des revendications précédentes,
**caractérisé en ce que**
l'ouverture de dégazage (122, 204) est située dans la zone d'élargissement maximum (116).
